(19) **Europäisches Patentamt / European Patent Office / Office européen des brevets**

(11) **EP 1 559 218 B1**

(12) **EUROPÄISCHE PATENTSCHRIFT**

(45) Veröffentlichungstag und Bekanntmachung des Hinweises auf die Patenterteilung:
**30.05.2007 Patentblatt 2007/22**

(21) Anmeldenummer: **03772224.6**

(22) Anmeldetag: **15.10.2003**

(51) Int Cl.:
*H04B 17/00* (2006.01) *H04L 1/20* (2006.01)

(86) Internationale Anmeldenummer:
**PCT/EP2003/011445**

(87) Internationale Veröffentlichungsnummer:
**WO 2004/042970 (21.05.2004 Gazette 2004/21)**

(54) **VERFAHREN ZUR SCHÄTZUNG EINER KANALQUALITÄT**

METHOD FOR ESTIMATING A CHANNEL QUALITY

PROCEDE POUR EVALUER UNE QUALITE DE CANAL

(84) Benannte Vertragsstaaten:
**DE FR GB IT**

(30) Priorität: **05.11.2002 DE 10251479**

(43) Veröffentlichungstag der Anmeldung:
**03.08.2005 Patentblatt 2005/31**

(73) Patentinhaber: **SIEMENS AKTIENGESELLSCHAFT**
**80333 München (DE)**

(72) Erfinder:
• **WIEDMANN, Ralf**
**81369 München (DE)**
• **RAAF, Bernhard**
**82061 Neuried (DE)**

(56) Entgegenhaltungen:
**EP-A- 1 146 660 WO-A-01/78254**
**US-A- 6 067 324**

• **"3rd Generation Partnership Project; Technical Specification Group Radio Access Network; Physical layer procedures (FDD) (Release 5)" 3GPP TS 25.214 V5.2.0, [Online] September 2002 (2002-09), XP002271320 Gefunden im Internet: <URL:http://www.3gpp.org/ftp/Specs/html-in fo/ 25214.htm> [gefunden am 2004-02-23] in der Anmeldung erwähnt**

EP 1 559 218 B1

**Beschreibung**

Die vorliegende Erfindung betrifft ein Verfahren zur Schätzung einer Kanalqualität, insbesondere bei der Verwendung eines Antennensystems mit mehreren Antennensegmenten.

In einem Mobilfunksystem das im Frequenzduplex betrieben wird, d.h. dass die Verbindung von einer Basisstation zu einer Mobilstation, der sogenannte "downlink" und die Verbindung von Mobilstation zu einer Basisstation, der "uplink", auf unterschiedlichen Frequenzen realisiert wird, kann die Basisstation im Allgemeinen die Kanalqualität des "downlinks" nicht selbst ermitteln, da dieser auf einer anderen Frequenz liegt und somit die Übertragungseigenschaften des Kanals unterschiedlich zum "uplink" sind. Deshalb wird die Abschätzung der Kanalqualität für den "downlink" von der Mobilstation durchgeführt und anschließend als Messung oder Nachricht der Basisstation mitgeteilt.

Nun soll die Abschätzung der Kanalqualität anhand eines Beispiels in UMTS näher erläutert werden. Unter Mobilstationen werden im folgenden Terminals, also Endgeräte in einem Kommunikationssystem, verstanden, beispielsweise Mobilfunkgeräte, mobile PCs, PDAs (personal digital assistants) etc. Unter Basisstationen werden Einrichtungen in einem Kommunikationssystem verstanden, die Datenübertragungen weitervermitteln. Bei dem Kommunikationssystem kann es sich beispielsweise um ein zelluläres Mobilfunknetz, WLAN System etc. handeln.

Es wird nun zunächst erläutert, was ein globales Pilotsignal ist. Anschliessend wird auf die Verwendung eines Pilotsignales bei sogenannter "Transmit Diversity", also einer Übertragung der Daten über mehr als eine Antenne, eingegangen. Im Anschluss daran spezielle Randbedingungen bei sogenannten Hochgeschwindigkeits -Datenübertragungskanälen betrachtet. Im folgenden wird dann genauer auf die Ermittlung der Kanalqualität eingegangen und wie das globale Pilotsignal, auf dessen Basis die Kanalqualität ermittelt werden kann, bei einem Transmit Diversity Modus geschätzt werden kann:

a) globales Pilotsignal:
Beispielsweise im UMTS (Universal System of Mobile Communication) System steht der Mobilstation zur Messung der Kanalschätzung des "downlinks" ein sogenanntes "globales Pilotsignal", das von der Basisstation gesendet wird, zur Verfügung. Das globale Pilotsignal kann z.B. aus einer vordefinierten und der Mobilstation bekannten Bitfolge bestehen, die in einer Mobilfunk-Zelle an alle Mobilstationen gleichermaßen gesendet wird. Das globale Pilotsignal wird bei UMTS auf dem CPICH (Common Pilot Channel) gesendet.
Die Mobilstation ermittelt die Empfangsleistung des Pilotsignals und berechnet daraus einen Referenzwert, der die Kanalqualität angibt. Dieser Referenzwert wird dann als Messung oder Nachricht an die Basisstation übertragen.

b) "Transmit Diversity"
Bei fortschrittlichen Basisstationen kann das Pilotsignal auch über mehrere Antennen übertragen werden. Daher ergibt sich das Problem wie die Leistung des Pilotsignals ermittelt werden soll, wenn dieses von mehreren Antennen gesendet wird. Im UMTS (Unviversal Mobile Telecommunication System) Standard sind verschiedene Methoden zur Anwendung von einer Diversifizierung der Übertragung (Transmit Diversity), wie die Verwendung mehrerer Antennen zur Signalübertragung auch bezeichnet wird, vorgesehen.
Bei den unterschiedlichen Methoden von Transmit Diversity handelt es sich beispielsweise um den STTD (Space Time Transmit diversity) Modus sowie zwei sogenannte "closed loop transmit diversity modes" 1 und 2. Grob gesprochen lässt sich folgende Unterscheidung treffen: Im Gegensatz zum STTD-Modus, bei dem das Antennensystem in der Basisstation das Signal über mehrere Antennen sendet, ohne eine Rückmeldung der Mobilstation einzuarbeiten, wird bei den Closed Loop Modi unter Berücksichtung eines Rückmeldesignals der Mobilstation das Signal über die unterschiedlichen Antennen derart gesendet, dass eine konstruktive Interferenz der Signale der einzelnen Antennen stattfindet. Beim STTD Modus kann also auch von einem Open Loop Modus gesprochen werden.

c) Hochgeschwindigkeitsdatenübertragungskanäle und Transmit Diversity
Mit den in UMTS neu eingeführten Hochgeschwindigkeits-Übertragungskanälen (HS-DSCH: High Speed -Downlink Shared Channel, HS-SCCH: High Speed Shared Control Channel) für High Speed Downlink Packet Access (HSDPA) stellt sich die Frage, wie die unterschiedlichen Transmit Diversity Verfahren auf diese Hochgeschwindigkeits-Übertragungskanäle angewendet werden.
Bei HSDPA werden die Daten in Paketen übertragen. Der Zeitpunkt für die Übertragung eines Pakets wird dabei so gewählt, dass an der jeweiligen Mobilstation, die das Paket empfängt momentan günstige Empfangsbedingungen vorhanden sind. Dies wird in der englischen Literatur auch als "Scheduling" bezeichnet. Ein "Scheduler" an der Basisstation wählt aus den Paketen, die momentan zur Übertagung für verschiedene Mobilstationen anstehen, dasjenige aus, welches wahrscheinlich bei der Übertragung die beste Qualität erwarten lässt.
Weiterhin legt ein "Scheduler" auch fest, mit welcher Energie, mit welcher Modulation, bzw. mit welcher Codierung die Pakete gesendet werden. Allgemein kann man sagen, der "Scheduler" legt neben dem Zeitpunkt der Übertragung auch das Format des Datenpakets fest.

Es muss also bei HSDPA die Signalisierung der Kanalqualitätsinformation (Channel Quality Information, CQI) im uplink (von der Mobilstation zur Basisstation) für den Fall angepasst werden, dass der CPICH (Common Pilot Channel) über zwei Antennen ausgestrahlt wird. Dies betrifft sowohl den Fall dass für die Hochgeschwindigkeits-Übertragungskanäle selbst kein Transmit Diversity Verfahren angewendet wird als auch den Fall, dass ein Diversity Verfahren angewendet wird.

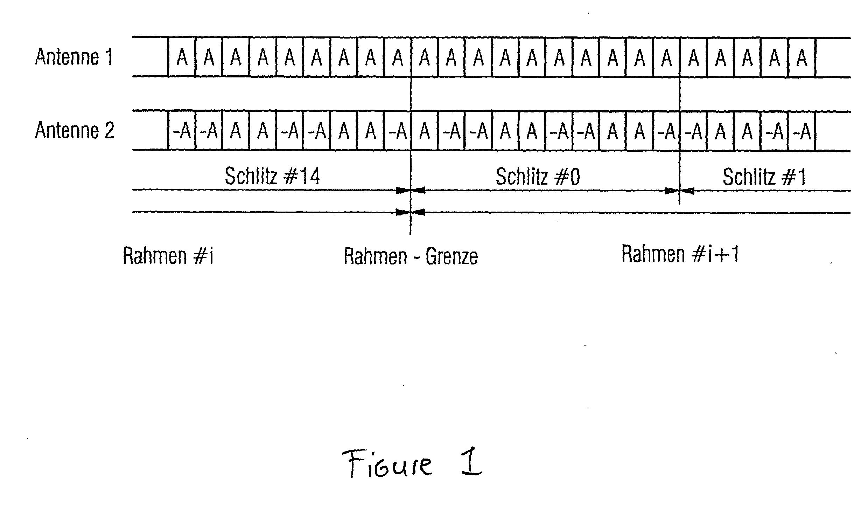

Im UMTS Standard ist gegenwärtig festgelegt, dass sobald in einer Mobilfunkzelle auf irgend einem Übertragungskanal Transmit Diversity verwendet wird, das globale Pilotsignal (CPICH) über beide Antennen bzw. Antennensegmente des Antennensystems der Basisstation übertragen wird. Dabei wird das Pilotsignal über Antenne 2 und Antenne 1 unterschiedlich moduliert, wie beispielsweise im 3GPP Standard beschrieben wird (vgl. Technical Specification 25.211 version 4.3.0 section 5.3.3.1). Dieser Sachverhalt ist dort in Figur 14 gezeigt. Im Falle dass keine Transmit Diversity verwendet wird, wird ebenfalls die Symbol Sequenz der Antenne aus Figur 14 verwendet. Diese Figur 14 wurde hier als Figur 1 aufgenommen.

Die Mobilstation kann anhand der unterschiedlich modulierten Pilotsignale zu Antenne 1 und Antenne 2 eindeutig zuordenbare Schätzungen des Übertragungskanals ermitteln. Diese Kanalschätzungen (zu Antenne 1 und Antenne 2) sind erforderlich, damit die Mobilstation physikalische Kanäle, die mit einem Transmit Diversity Verfahren ausgestrahlt werden, richtig empfängt.

d) Ermittlung der Kanalqualität

Die Qualität der Übertragung wird durch den Übertragungskanal beeinträchtigt und unterliegt zeitlichen Schwankungen. Um festzulegen, zu welcher Mobilstation ein Paket gesendet wird, muss die Basisstation demzufolge Kenntnis über den Übertragungskanal, bzw. die zu erwartende Qualität der Übertragung haben. Weil die Basisstation die Qualität des Sendesignals von der Basisstation zur Mobilstation nur schlecht ermitteln kann, wurde im UMTS Standard eine Signalisierung der "Channel Quality Information (CQI)" von der Mobilstation zur Basisstation eingeführt.

Die Mobilstation ermittelt anhand des von der Basisstation ausgesendeten Pilotsignals (Common PIlot CHannel, CPICH) einen aktuellen Schätzwert der Kanalqualität. Daraufhin teilt die Mobilstation der Basisstation über den CQI mit, welche Qualität momentan auf dem Donwlink Kanal zu erwarten ist. Dies wird bei dem im UMTS spezifierten HSDPA System dadurch bewerkstelligt, dass die Mobilstation der Basisstation mitteilt welches Format (d.h. Modulation, Codierung, etc.) für das nächste Datenpaket am besten gewählt werden sollte.

Wird in einer Zelle das Pilotsignal (CPICH) über zwei Antennen ausgestrahlt (siehe früherer Abschnitt), so ist bei Verwendung von Transmit diversity Verfahren nicht klar, wie genau die Mobilstation auf optimale Weise die Schätzung der Kanalqualität vornehmen soll.

Dafür wurden bisher folgende Lösungen vorgeschlagen:

Für die Anpassung der Signalisierung des CQI ist in dem entsprechenden Standard TS 25.214 die folgende Festlegung bekannt.

Aus 3GPP TS 25.214 V5.2.0 (2002-09) ist in Kapitel 6A.2" Channel quality indicator (CQI) definition" festgelegt, worin sinngemäß folgendes ausgesagt wird: " Wenn transmit diversity für eine Funkverbindung der betreffenden HS-DSCH Zelle verwendet wird, dann gibt $P_{CPICH}$ die empfange Leistung des kombinierten CPICH von beiden Diversitätsantennen an, anderenfalls gibt $P_{CPICH}$ die Leistung der Nicht-Diversitätsantenne an."

Hier bei bezeichnet $P_{CPICH}$ die empfangene Signalleistung des Pilotkanals, die ein Parameter ist, aus dem ein Maß für die Empfangsqualität des Datenkanals berechnet wird. Weitere Parameter hierzu sind die Rauschleistung und die Leistung von Störungen am Empfänger und das Leistungsverhältnis zwischen dem Pilotkanal und dem Datenkanal.

Die Stelle aus der Spezifikation sagt aus, dass bei Einsatz von Transmit-Diversity die empfangene Gesamtleistung der beiden Antennen verwendet werden soll, ansonsten nur die Leistung der ersten, auch als Nicht-Diversitäts-Antenne bezeichneten Antenne. Diese Klarstellung löst Teile des Problems, liefert aber immer noch keine optimale Vorhersage der Empfangsqualität da erstens keine Unterscheidung zwischen den unterschiedlichen Transmit diversity Verfahren (STTD, model, mode2 und evtl. weitere Verfahren) gemacht wird und anderseits auch real zu erwartende Imperfektionen der Verfahren nicht berücksichtigt werden.

e)Schätzung des globalen Pilotsignals bei Transmit Diversity

Bei Verwendung von mehreren Antennen an der Basisstation besteht zusätzlich ein Problem, wenn die Basisstation für den Datenkanal, beispielsweise den DPCH (Dedicated Physical Channel) oder den HS-PDSCH (High Speed Physical Downlink Shared Channel) zur Mobilstation auf den einzelnen Antennen unterschiedliche Phasendrehungen anwendet als für die Übertragung des CPICH (Common Pilot Channel) benutzt wird. Die unterschiedlichen Phasen auf den Antennen werden normalerweise dazu verwendet, einen Strahlformungs-Gewinn für den "downlink" Kanal zur Mobilstation zu erzeugen.

Das Problem kann dadurch gelöst werden, dass auf den unterschiedlichen Antennen die Pilotsignale in Form von zueinander orthogonalen Sequenzen übertragen werden. Damit kann die Mobilstation die Empfangsleistung getrennt für jede Antenne ermitteln. Die ermittelten Leistungen der einzelnen Antennen werden dann anschließend addiert:

$$P_{pilot} = P_1 + P_2 + \cdots + P_n = |h_1|^2 + |h_2|^2 + \cdots + |h_n|^2$$

n ... Anzahl der Antennen
h ... komplexwertige Schätzung des Kanals

Dabei werden orthogonale Sequenzen verwendet, um eine korrekte Schätzung zu ermöglichen, d.h. um die Pilotsignale der einzelnen Antennen unabhängig voneinander empfangen zu können.
In den meisten Fällen wurde allerdings festgestellt, dass für die Leistung des Pilotsignals ein zu niedriger Wert ermittelt wird.
Ausgehend von diesem Stand der Technik ist es Aufgabe der Erfindung ein Verfahren zur Schätzung einer Kanalqualität bei einer Datenübertragung über mehrere Antennensegmente anzugeben, welches gegenüber dem Stand der Technik zuverlässigere Schätzwerte liefert.
Diese Aufgabe wird durch ein Verfahren gemäß den Merkmalen der unabhängigen Ansprüche gelöst. Vorteilhafte Weiterbildungen finden sich in den abhängigen Ansprüchen.
Kern der Erfindung ist es, die Kanalqualität unter Einbeziehung von zwischen Mobilstation und Basisstation ausgetauschten Rückkopplungsinformationen zu ermitteln.
Nun soll die Erfindung näher anhand ausgewählter Beispiele betrachtet werden, die teilweise auch in den Figuren dargestellt sind. Zumeist beschränken sich die Ausführungen auf zwei Antennenelemente, lassen sich aber auch auf mehrere Antennenelemente ausdehnen. Weiterhin beziehen sich die Ausführungen auf den Fall eines einzigen Ausbreitungspfades für jedes Antennensegment. Falls mehrere Ausbreitungspfade (taps) existieren, lässt sich dieses Verfahren sinngemäß erweitern, indem die Energie über alle Ausbreitungspfade, die die Mobilstation empfängt, aufaddiert wird. Für die Verhältnisse bei jedem einzelnen Ausbreitungspfad, gelten die in den Ausführungen für das jeweilige Transmit Diversity genannten Berechnungsformeln:
Es zeigen:

Fig.1 Das Modulationsschema (Modulation pattern) für den Common Pilot Channel CPICH, wobei A = 1+j gesetzt wurde. Hierbei ist A ein komplexe Zahl und j der imaginäre Anteil der komplexen Zahl. Diese Figur entspricht der Figur 14 aus dem 3GPP Standard: Technical Specification 25.211 version 4.3.0 section 5.3.3.1

Für die Lösung des Problems, die Kanalqualität zu signalisieren kommen folgende Alternativen in Betracht:
Im Folgenden werden vorteilhafte Ausführungsbeispiele vorgestellt, bei denen die Schätzung der Qualität eines Kanals (Kanalschätzung) verbessert wird, indem ein Strahlformungsgewinn berücksichtigt wird, welcher durch die Verwendung von mehr als einem Antennensegment bedingt ist. Unter Antennensegment wird im Rahmen der Anmeldung ein strahlendes Element einer Antenne verstanden, welches von einem anderen strahlenden Element räumlich getrennt ist. Der Strahlformungsgewinn hängt von den - unter Umständen komplexwertigen - Schätzungen der Übertragungskanäle der einzelnen Antennen ab.
Der Strahlformungsgewinn entsteht, wenn ein Signal von mehreren räumlich getrennten Antennenelementen beispielsweise so ausgesandt wird, dass in einer Richtung eine konstruktive Interferenz auftritt, in einer anderen eine destruktive Interferenz.
Die Ausführungsbeispiele beschäftigen sich damit, wie in Abhängigkeit von dem jeweils verwendeten Transmit Diversity Modus eine Kanalschätzung unter Berücksichtung der durch die einzelnen Antennenelemente definierten Übertragungswege durchgeführt wird.
Zur Änderung eines Kanals bei einem Antennensystem bestehend aus zumindest zwei Segmenten lassen sich folgende Größen einstellen:

- Leistung eines Antennensegments (Amplitude)
- Phasenverschiebung des über ein Antennenelements gesendeten Signals bezüglich des über ein anderes Antennenelement gesendeten Signals.

Diese beiden Größen, Amplitude und Phase bezeichnet man als Antennengewichte.
Diese Anpassung kann ohne oder unter Verwendung von Rückkopplungsinformationen vorgenommen werden (open bzw. closed loop modi), jedoch lässt sich die Kanalqualität abhängig vom verwendeten Verfahren unterschiedlich bestimmen, bzw. würden in einem Fall sinnvolle Bestimmungsmethoden in einem anderen zu nicht zufriedenstellenden Ergebnissen führen.

Bei sogenannten Feedback-Verfahren sendet die Mobilstation über einen Feedback-Kanal Informationen an die Basisstation, die angeben, wie die Phasen und ggf. Amplituden-Verhältnisse zwischen den Antennen eingestellt werden sollen.

Bei Feedback-Verfahren treten aufgrund der Zeitverzögerung folgende Probleme auf:

## Schätzungen der Kanalqualität im Feedback Modus

Die Übermittlung der geschätzten Kanalqualität, welche bei UMTS durch den Parameter CQI ausgedrückt wird, sollte bei allen Verfahren so durchgeführt werden, dass sie möglichst genau die Qualität wiedergibt, mit der ein Datenpaket empfangen wird, welches von der Basisstation nach Empfang (und Auswertung) der CQI gesendet wird. Die folgenden Ausführungen gelten insbesondere bei Verwendung von closed loop transmit diversity Verfahren. Die Mobilstation sollte annehmen, dass die Basisstation die Antennengewichte gemäß der von der Mobilstation gesendeten (oder noch zu sendenden) Feed-back Signale einstellt. Da durch die Feedback-Signalisierung eine Verzögerung eintritt, sind die Antennengewichte zum Zeitpunkt ihrer Anwendung evtl. nicht mehr optimal, da bereits 'veraltet'. Dieser Effekt sollte aber auch bei der CQI Signalisierung berücksichtigt werden, damit diese nicht zu optimistisch ausfällt. Dabei gibt es drei Möglichkeiten:

Als erstes kann die Mobilstation annehmen, dass die Basisstation nicht die aktuell optimalen Antennengewichte anwendet, sondern die, die die Mobilstation in der Vergangenheit signalisiert hat, wobei die Vergangenheit gerade der durch die Feedback Signalisierung bedingten Verzögerung entspricht. Die Mobilstation kann diese Abschätzung sehr leicht durchführen, indem sie die zum früheren Zeitpunkt gesendeten Feedback Kommandos bzw. die zugeordneten Antennengewichte speichert, um sie nun für die Berechnung der Übertragungsqualität zu benutzen. Die Mobilstation muss diese Werte ohnehin speichern, da sie auch davon ausgehen wird, dass die aktuell übertragenen Nutzdaten unter Verwendung eben dieser Antennengewichte übertragen werden.

Als zweite Möglichkeit kann die Mobilstation annehmen, dass die Basisstation die aktuellen (tatsächlich erst zu signalisierenden und somit erst in Zukunft angewandten) Antennengewichte benutzt, bei der Qualitätsbestimmung aber berücksichtigt, dass sich die Kanaleigenschaften ändern werden. Die Mobilstation übermittelt dann z.B. den Erwartungswert der Übertragungsqualität unter Berücksichtigung der in der Zukunft stattfindenden Änderung des Übertragungskanals. Natürlich kennt die Mobilstation die in der Zukunft stattfindenden Änderung des Übertragungskanals nicht. Daher wird nicht die tatsächliche zukünftige Qualität, sondern nur der Erwartungswert der Qualität in der Zukunft übermittelt, der sich anhand einer Analyse der zeitlichen Korrelation des Übertragungskanals bestimmen lässt. Das zweite Verfahren ist zwar etwas aufwendiger, wird aber bessere Ergebnisse liefern: Beim ersten Verfahren kann es sein, dass sich der Übertragungskanal in der Vergangenheit nicht stark geändert hat, dass also die in der Vergangenheit signalisierten und aktuell verwendeten Antennengewichte zufälliger Weise auch aktuell optimal sind. Dann wird eine sehr gute Qualität gemeldet. Die geringe Änderung des Übertragungskanals in der Vergangenheit heißt aber nicht, dass er sich auch in Zukunft wenig ändert, daher ist diese Qualität wahrscheinlich zu optimistisch. Genauso kann auch der Fall auftreten, dass sich der Übertragungskanal in der Vergangenheit mehr als üblich geändert hat, dadurch die Antennengewichte recht ungünstig sind und somit die CQI besonders schlecht ist, was aber auch nicht heißt, dass sich der Kanal in Zukunft auch so schnell ändern muss. Beim zweiten Verfahren würden in beiden Fällen die gleiche, durchschnittliche CQI ermittelt werden, was eher angepasst sein wird. Es gibt auch noch eine dritte Variante, welche die Implementierung bei der Mobilstation erleichtert. Hierbei übermittelt die Mobilstation die CQI unter der Annahme, dass die Basisstation die Antennengewichte ohne Verzögerung sofort einstellt. Dies ergibt natürlich eine zu optimistische CQI, da diese Annahme nicht zutrifft. Die Basisstation analysiert nun die zeitliche Korrelation des Übertragungssignals und schätzt damit ab, wie der Erwartungswert der Übertragungsqualität sein wird. Die Basisstation führt also eine entsprechende Analyse und Berechnung durch, wie die Mobilstation im zweiten Verfahren. Dadurch wird Komplexität der Implementierung von der Mobilstation in die Basisstation verlagert, was für das Gesamtsystem günstiger ist, da es mehr Mobilstationen als Basisstationen gibt und somit die Gesamteinsparung aller Mobilstationen den Mehraufwand der Basisstationen überwiegt.

## Kanalschätzungen für durch einzelne Antennen bzw. Antennensegmente definierte Übertragungswege:

Ein weiterer Aspekt, der beachtet werden kann, ist die endliche Diskretisierung der Rückkopplungsinformation, d.h die Zuordnung von Rückkopplungsinformation zu einzelnen Antennenelementen. Die Mobilstation kann die Ausbreitungseigenschaften des Kanals, dem die Aussendungen über die verschiedenen Antennen unterliegen, abschätzen, dadurch dass auf den unterschiedlichen Antennen Pilotsignale in Form von zueinander orthogonalen Sequenzen übertragen werden. Damit kann die Mobilstation die Kanaleigenschaften und Empfangsleistungen getrennt für jede Antenne ermitteln.

**Analyse der Genauigkeit der ermittelten Leistung des globalen Pilotsignals in Abhängigkeit von der Einstellung der Antennengewichte und daraus abgeleitete Leistungsermittlungsmethode**

Es wird nun betrachtet, wie die Leistung eines globalen Pilotsignal aus Signalen der einzelnen Antennen ermittelt wird. Dies ist auf der Spezifikation 25.214 an sich bekannt. Hier wird eine Analyse durchgeführt, inwieweit die Leistung eines Pilotsignales korrekt beschrieben wird, und zwar in Abängigkeit von der -mehr oder weniger optimalen- Einstellung der Antennenparameter. Auf diesen Erkenntnissen aufbauend, werden dann die Verfahren zur Leistungsermittlung für die einzelnen Transmit Diversity Modi geschildert.

Im folgenden wird diese Nomenklatur verwendet:

$n$ : Anzahl der Antennen
$s$ : komplexwertiges zu übertragendes Symbol
$s_i$ : komplexwertiges Sendesignal der Antenne i
$r_i$ : komplexwertiges Empfangssignal an der Mobilstation aufgrund des Sendesignals der Antenne i
$h_i$ : komplexwertiger Einfluss des Kanals auf das Sendesignal der Antenne i
$r$: gesamtes Empfangssignal
$w_i$ : Antennengewicht angewandt für die Abstrahlung des Sendesignals der Antenne i

Es gilt dann für die Pilotsignale:

$$rp_i = sp_i\ h_i$$

Die zeitliche Abhängigkeit der Grössen, beispielsweise $r_i(t)$, wird hier zur Vereinfachung der Schreibweise nicht ausgeführt. Aus dem bekannten Sendesignal $sp_i$ der Pilotsignale und dem Empfangswert $rp_i$ der Pilotsignale kann die Mobilstation auf den Kanal $h_i$ schließen. Die Mobilstation kann außerdem die Empfangsleistung der einzelnen Pilotsignale bestimmen: $Pp_i = |rp_i|^2 = |sp_i|^2\ |h_i|^2$ und daraus die Gesamt-Empfangsleistung der Pilotsignale:

$$Pp = |rp_1|^2 + |rp_2|^2 + \ldots + |rp_n|^2 =$$
$$= |sp_1|^2\ |h_1|^2 + |sp_2|^2\ |h_2|^2 + \ldots + |sp_n|^2\ |h_n|^2$$

Die eigentlichen Daten werden nicht, wie die Pilotsignale, mit unterschiedlichen Sequenzen auf den unterschiedlichen Antennen übertragen, sondern mit der gleichen Sequenz. Die Signale überlagern sich daher beim Empfänger zu einem Summensignal.
Damit diese Überlagerung konstruktiv erfolgt, werden die Sendesymbole vor der Übertragung mit passenden Anten- nengewichten multipliziert.:

$$r = r_1 + r_2 + \ldots r_n = s_1\ h_1 + s_2\ h_2 + \ldots + s_n\ h_n =$$
$$= s\ w_1\ h_1 + s\ w_2\ h_2 + \ldots + s\ w_n\ h_n =$$
$$= s\ (\ w_1\ h_1 + w_2\ h_2 + \ldots + w_n\ h_n)$$

Dadurch ergibt sich bei passender Wahl der Antennengewichte eine Verstärkung der Übertragung. Die optimale Wahl der Gewichte ergibt sich, wenn die Antennengewichte gleich dem (genauer gesagt proportional zum) konjugiert komplexen der Kanalkoeffizienten sind, wenn also gilt:

$$w_n = a \ h_n^{*}$$

wobei a so gewählt wird, dass die Summe der Quadrate der Antennengewichte gleich 1 ist, $(|w_1|^2 + |w_2|^2 + ... + |W_n|^2)$ =1, also a= $(|h_1|^2 + |h_2|^2 + ... + |h_n|^2)^{-1/2}$, was zur Folge hat, dass die Abgestrahlte Gesamt-Leistung unabhängig von den Kanalkoeffizienten bzw. den Antennengewichten gleich $|s|^2$ ist.

$$r = s \ ( \ w_1 \ h_1 \ + \ w_2 \ h_2 \ + \ ... \ + \ w_n \ h_n) \ =$$
$$= s \ (a \ h_1^{*} \ h_1 \ + \ a \ h_2^{*} \ h_2 \ + \ ... \ + \ a \ h_n^{*} \ h_n) \ =$$
$$= s \ a \ (|h_1|^2 \ + \ |h_2|^2 \ + \ ... \ + \ |h_n|^2) \ =$$
$$= s \ (|h_1|^2 \ + \ |h_2|^2 \ + \ ... \ + \ |h_n|^2)^{\ 1/2}$$

Die Empfangsleistung des Summensignals r ist dann (bei wie gesagt optimalen Antennengewichten):

$$P = |r|^2 \ = s \ (|h_1|^2 \ + \ |h_2|^2 \ + \ ... \ + \ |h_n|^2)$$

Unter der Annahme, dass die Summe der über die einzelnen Antennen abgestrahlten Leistungen eines Datensymbols gleich der Summe der abgestrahlten Leistungen der Pilot-Symbole ist, also $|s|^2 = |sp_1|^2 + |sp_2|^2 + ... + |sp_n|^2$ = n $|sp_1|^2$ (ansonsten lassen sich Unterschiede bei Kenntnis des Leistungsverhältnis entsprechend berücksichtigen) ergibt sich daraus:

$$P = n \ |sp_1|^2 \ (|h_1|^2 \ + \ |h_2|^2 \ + \ ... \ + \ |h_n|^2) \ =$$
$$= n \ (|sp_1 \ h_1|^2 \ + \ |sp_2 \ h_2|^2 \ + \ ... \ + \ |sp_n \ h_n|^2) \ =$$
$$= n \ (|rp_1|^2 \ + \ |rp_2|^2 \ + \ ... \ + \ |rp_n|^2) \ =$$
$$= n \ (Pp_1 \ + \ Pp_2 \ + \ ... \ + \ Pp_n) \ = n \ Pp$$

In diesem optimalen Fall ist also die Empfangsleistung des Signals proportional zum n- fachen der Summe der Empfangsleistungen der Pilotsignale der einzelnen Antennen. In diesem Fall wird folglich auch bei der Berechnung des CQI Reports von dieser n- fachen Summenleistung auszugehen sein.
Dies gilt aber nur für den idealen Fall von Transmit-Diversity unter Verwendung von optimal eingestellten Antennengewichten. Werden die Gewichte nicht optimal eingestellt, oder wird gar ein sog. open Loop transmit diversity Verfahren angewandt, so ergibt sich ein schlechteres Empfangssignal.
Somit sollte auch ein entsprechend schlechterer Wert der Kanalqualität übertragen werden, beispielsweise im CQI Report.
Bei sog. open loop transmit diversity Verfahren wird keine optimierte Anntennengewichtung durchgeführt, da keine Rückkopplungsinformation zur Verfügung steht. Vereinfacht ausgedrückt werden die Sendesignale zeitlich nacheinander über die verschiedenen Antennen abgestrahlt, dadurch ergibt sich die (durchschnittliche) Empfangsleistung für die Signale aus dem Durchschnitt der Empfangsleistung der Aussendung über die verschiedenen Antennen, also

$$P = s \ (|h_1|^2 \ + \ |h_2|^2 \ + \ ... \ + \ |h_n|^2)/n \ = Pp$$

Dies ist also ein im Vergleich zum optimalen Fall von closed loop um den Faktor n schlechterer Wert.

**Ergebnisse der Analyse**

Das in der Spezifikation 25.214 genannte Verfahren zur Leistungsermittlung ist also nur für den Fall optimal, dass open loop transmit diversity Verfahren verwendet werden, und somit sehr häufig deutlich suboptimal, da deutlich zu pessimistische Empfangsqualitäten ohne den Vorteil von closed loop transmit diversity Verfahren angenommen werden.

Ausführungsbeispiel für nicht optimal eingestellte Antennengewichte

In einem Ausführungsbeispiel wird die Empfangsleistung der Daten bei Verwendung von open loop Transmit diversity abgeschätzt anhand dem n-fachen der Summe der Empfangsleistungen der Pilotsignale der n Antennen. Dieses Ausführungsbeispiel ist dann optimal, wenn optimale Antennengewichte verwendet werden. Bei Verwendung von open loop transmit diversity Verfahren kann weiterhin nur die Summe der Empfangsleistungen der Pilotsignale der n Antennen verwendet werden.

**Das Antennengewicht beeinflussende Faktoren**

In der Praxis werden aber aufgrund verschiedener Einflüsse nicht immer ideale Antennengewichte verwendet werden können. Zu diesen Einflüssen zählen:

1) Diskretisierung: Die Antennengewichte lassen sich nicht beliebig genau einstellen bzw. signalisieren sondern nur mit einer gewissen Diskretisierung, welche beispielsweise von der zur Verfügung stehenden Hardware abhängt. Die verwendeten Gewichte weichen daher mehr oder weniger von den optimalen Gewichten ab.

2) Verzögerung: Die optimalen Antennengewichte werden von der Mobilstation zu einer gewissen Zeit bestimmt. Durch die Dauer der dafür notwendigen Messung durch die mit der Rückmeldung an die Basisstation und die Anwendung der Gewichte werden die Gewichte aber erst zu einem späteren Zeitpunkt wirksam. Zu diesem Zeitpunkt haben sich die Ausbreitungsbedingungen aber, je nach der Geschwindigkeit der Mobilstation und dem Umgebungs-Szenario bereits mehr oder weniger geändert, so dass die Gewichte zum Zeitpunkt ihrer Anwendung nicht mehr optimal sind.

3) Rückkopplungsfehler: Durch Übertragungsfehler auf dem Rückkopplungskanal kann es vorkommen, dass verfälschte Antennengewichte angewendet werden, welche zu einem reduzierten Empfangssignal führen.

4) Auch Kombinationen der vorgenannten Einflüsse führen zu einer nicht optimalen Einstellung der Antennengewichte.

Im folgenden wird gezeigt werden, wie diese Effekte bei der Berechnung der Empfangsqualität berücksichtigt werden können.

Zu 1) Diskretisierung der Antennengewichte: Die Mobilstation kennt nicht nur die aus den aktuellen Kanalparametern abgeleiteten optimalen Antennengewichte, sondern auch die übertragenen, diskretisierten Antennengewichte. Sie kann daher bei der Berechnung der Empfangsleistung diese tatsächlich verwendeten diskretisierten Antennengewichte berücksichtigen.

Damit ergibt sich für die Abschätzung der Empfangsleistung der Datensymbole:

$$r = s ( w_1 h_1 + w_2 h_2 + \ldots + w_n h_n)$$

$$P = |r|^2 = |( s w_1 h_1 + s w_2 h_2 + \ldots + s w_n h_n)|^2 =$$

$$= |( sp_1 w_1 h_1 + sp_2 w_2 h_2 + \ldots + sp_n w_n h_n)|^2 =$$

$$= |( rp_1 w_1 + rp_2 w_2 + \ldots + rp_n w_n)|^2$$

Diese Gleichung gilt wieder unter der Annahme, dass die Leistung der Pilotsymbole gleich der Leistung der Datensymbole ist.

Für den Fall von zwei Antennen ergibt sich dann die folgende Formel:

$$P = |r|^2 = |(\ w_1\ rp_1\ +\ w_2\ rp_2\ )|^2$$

Bei UMTS wird bei dieser Erfindung mit P die Leistung des CPICH im Falle von closed loop Transmit Diversity abgeschätzt und für die Berechung des Quality Feedback (CQI) verwendet. Das generelle Verfahren, wie der CQI aus der Schätzung der Leistung des CPICH berechnet wird, ist in der bereits erwähnten Spezifikation 25.214 Kapitel 6A.2 "Channel quality indicator (CQI) definition" festgelegt.

Strenggenommen ist P nicht die Leistung des CPICH im engeren Sinne, sondern die Leistung, die ein ohne transmit diversity abgestrahlter Kanal haben müsste, um zu gleichen Empfangsleistungen zu führen, wie der gegebene Kanal mit transmit diverisity. Auf solche Feinheiten der Definition wird aber im folgenden nicht weiter eingegangen.

Je nachdem, wie gut die diskretisierten Gewichte die optimalen Gewichte treffen, ist die (abgeschätzte) Empfangsqualität somit mehr oder weniger weit vom bereits besprochenen idealen Fall entfernt. Da dies aber auch für die eigentlich übertragenen Daten gilt, bietet dieses Ausführungsbeispiel eine genauere Abschätzung der tatsächlichen Übertragungsverhältnisse, als das Ausführungsbeispiel, bei dem ideale Antennengewichte angenommen wurden.

Zu 2) Verzögerung der Antennengewichte:

Die Mobilstation schätzt über einen gewissen Zeitraum die Kanalkoeffizienten, bestimmt daraus die Antennengewichte, sie werden dann von der Mobilstation über einen Rückkopplungskanal an die Basisstation übertragen und dann von der Basisstation angewandt. Alle diese Schritte erzeugen eine gewisse Verzögerung, so dass die Antennengewichte, wenn sie angewandt werden im allgemeinen nicht mehr optimal sind, da sich der Kanal ja im allgemeinen zwischenzeitlich geändert hat. Je nach der Geschwindigkeit der Kanaländerung können die Antennengewichte mehr oder weniger stark von der optimalen Auswahl abweichen.

Dieser Effekt kann leicht bei der Abschätzung der Empfangsqualität berücksichtigt werden, indem bei der im vorigen Ausführungsbeispiel verwendeten Formel nicht die aktuell bestimmten Antennengewichte verwendet werden, sondern die Antennengewichte, die aktuell von der Basisstation verwendet werden. Das sind die Antennengewichte, die früher bestimmt wurden, wobei die frühre Zeit gerade der Zeitverzögerung bis zur Anwendung der Antennengewichte entspricht. Wenn beispielsweise eine Verzögerung von 3 Zeitschlitzen zwischen der Messung der Kanalkoeffizienten bis zur Anwendung der Antennengewichte auftritt, so sollten für die Abschätzung der Empfangsqualität in einem Zeitschlitz die Antennengewichte, die von der drei Zeitschlitze früher durchgeführten Messung der Kanalkoeffizienten herrühren verwendet werden.

Zur Bestimmung der Empfangsleistung zur Zeit t also P(t) berechnet man bei einer Verzögerungszeit von T der Anwendung der Antennengewichte also:

$$P(t) = |(\ rp_1(t)\ w_1(t-T)\ +\ rp_2(t)\ w_2(t-T)\ +\ ...\ +\ rp_n(t)\ w_n(t-T))|^2$$

Zu 3) Rückkopplungsfehler:

Durch Übertragungsfehler auf dem Rückkopplungskanal kann es vorkommen, dass verfälschte Antennengewichte angewendet werden, welche zu einem reduzierten Empfangssignal führen. Die Mobilstation hat die Möglichkeit solche Übertragungsfehler zu erkennen, indem sie das tatsächliche Empfangssignal mit dem erwarteten Empfangssignal bei fehlerfreier Übertragung vergleicht.

Dies beeinträchtigt natürlich auch eine gerade laufende Übertragung, so dass idealer Weise diese tatsächlich realisierte Übertragungsqualität für die Auswahl der Parameter des Übertragungsverfahrens verwendet werden sollte. Falls die Mitteilung (Rückkopplung) der Übertragungsqualität an die Mobilstation schneller erfolgt, als die Rückkopplung der Antennengewichte, dann ist es auch sinnvoll, die Übertragungsqualität unter Berücksichtigung der "falschen" Antennengewichte mitzuteilen. Allerdings sind die Verhältnisse in HSDPA gerade umgekehrt. Die Verzögerung der Rückkopplungsinformation für Antennengewichte beträgt nur 2 bis 3 Zeitschlitze, während die Verzögerung für das CQI mehrere Zeitschlitze beträgt. In diesem Fall macht es wenig Sinn, solche Übertragungsfehler zu berücksichtigen, da der Effekt der Übertragungsfehler schon vorbei ist, wenn die CQI Information wirksam wird. Statt dessen ist es besser, die Empfangsqualität ohne solche Übertragungsfehler zu bestimmen: Übertragungsfehler treten typischer Weise nicht allzu häufig auf (ca. in 1% bis 10% der Fälle). Die Tatsache, dass gerade ein Übertragungsfehler aufgetreten ist, heißt nicht, dass auch zu dem Zeitpunkt, wo die Rückgekoppelte Information der Empfangsqualität wirksam wird ebenfalls gerade wieder ein Übertragungsfehler auftritt. Da solche Fehler selten sind (ansonsten würde das closed loop Verfahren nicht zufriedenstellend arbeiten und würde daher wohl gar nicht erst eingesetzt werden) ist es vielmehr wahrscheinlicher, dass zu diesem Zeitpunk kein Übertragungsfehler auftritt. Daher ist die Information über die Kanalqualität ohne Übertragungsfehler sinnvoller. Natürlich wird die abgeschätzte Übertragungsqualität im Falle eines Übertragungsfehlers nicht erreicht werden können, aber trotzdem ist es vernünftiger vom Normalfall auszugehen und die Übertragungsparameter darauf auszurichten. Sollte ein Übertragungsfehler auftreten, so wird das übertragenen Paket dann wahrscheinlich nicht Dekodierbar sein, aber dies kann durch eine Wiederholung des Pakets gemäß dem HARQ Protokoll von HSDPA ausgeglichen werden.

Gemäß einem Ausführungsbeispiel wird bei der Bestimmung der Empfangsqualität nicht die durch Übertragungsfehler beeinträchtigte tatsächliche Empfangsqualität mitgeteilt, sondern die Empfangsqualität, die ohne Übertragungsfehler gegeben wäre.

Sollte allerdings der Zweck der Kanalqualitätsermittlung, im Falle von UMTS also des CQI Reports, nicht primär darin bestehen, die Übertragungsqualität für die Anpassung von Parametern von zukünftigen Übertragungen anzupassen sondern darin bestehen, abzuschätzen, wie viel Information bei bereits übertragenen Paketen angekommen ist so sollte die tatsächliche Empfangsqualität inkl. aller Degradationen übertragen werden. Anhand dieser Information kann die Basisstation dann bei einem nicht korrekt empfangenen Paket besser abschätzen, wie viel zusätzliche Information bei einer Wiederholungsübertragung gesendet werden muss, damit das Paket unter Verwendung aller Übertragungen dekodiert werden kann.

Zu 4) Kombination der Vorgenannten Einflüsse:

In der Praxis treten meist mehrere oder gar alle oben genannten Effekte gleichzeitig auf. Dies kann spezielle Kombinationseffekte ergeben: Beispielsweise Diskretisierung und Verzögerung: Durch die Diskretisierung werden nicht die aktuell optimalen Antennengewichte übermittelt, sondern die nächstbesten diskretisierten Gewichte, die sich von den optimalen meist unterscheiden. Durch die Verzögerung bis zur Anwendung der Gewichte ändert sich der Kanal. Die nun optimalen diskretisierten Gewichte können aber trotzdem immer noch die selben sein wie die zuvor bestimmten. Dann erzeugt die Verzögerung keine zusätzliche Degradation zur Degradation die durch die Diskretisierung bedingt ist. Natürlich kann es auch sein, dass sich der Kanal so ändert, dass eine andere Diskretisierung optimal wird. Dann erzeugt die Verzögerung eine zusätzliche Degradation. Im allgemeinen tritt das auf, wenn ursprünglich der optimale Wert ungefähr in der Mitte zwischen zwei Diskreten Werten liegt. Wenn sich der Kanal dann nicht zu sehr ändert, also immer noch ungefähr in der Mitte zwischen diesen Diskretisierungen bleibt, so wird sich keine gravierende Degradation ergeben. Es gibt auch den Fall, dass durch die Diskretisierung die Degradation der Verzögerung verringert wird, das ist dann der Fall, wenn sich der Kanal gerade in die Richtung ändert, in welcher der diskretisierte Wert vom optimalen Wert der Antennengewichte abweicht. Somit ist nicht a priori klar, wie sich eine solche Kombination auswirkt. Im allgemeinen wird es immer noch am besten sein, die kombinierten Effekte bei der Abschätzung der Empfangsqualität zu berücksichtigen, also die Empfangsqualität anhand der verzögerten und diskretisierten Antennengewichte zu bestimmen. Allerdings kann es in spezifischen Fällen auch besser sein, nur einen dieser Effekte zu berücksichtigen. Ob ein solcher Fall vorliegt, muss durch Simulationen geklärt werden.

**Berechnungsbeispiele des globalen Pilotsignals $P_{CPICH}$**

Es werden nun noch einige Fälle aufgezeigt, wie sich das globale Pilotsignal CPICH berechnen lässt. Die unter den Ziffern bezeichneten Vorgehensweisen lassen sich auch wahlweise miteinander kombinieren.

1. Zur Berechnung der Leistung des globalen Pilotsignals CPICH ($P_{CPICH}$) wird bei der Verwendung von STTD oder einem anderen Open Loop Verfahren folgender Berechnungsweg benutzt, der hier für zwei Antennenelemente ausgeführt ist:

$$P_{CPICH} = P_1 + P_2 = \left|h_1\right|^2 + \left|h_2\right|^2 ;$$

Bei der Verwendung von Closed Loop Transmit Diversity wird folgende Berechnung ausgeführt, die sich auch auf mehr als zwei Antennenelemente verallgemeinern lässt:

$$P_{CPICH} = \left|w_1 h_1 + w_2 h_2\right|^2 .$$

Im Falle eines Closed Loop Modus ohne irgendwelche Übertragungsstörugen oder sonstige Fehlerquellen ergibt sich $P_{CPICH} = (|h_1|+|h_2|)^2$.

Bei HSDPA ist es bei der Verwendung von Transmit Diversity Verfahren am einfachsten, jeweils das gleiche Transmit Diversity Verfahren, welches für den zugehörigen "normalen" Datenübertragungskanalerwendet wird, zu verwenden. Im Falle des HS-PDSCH ist dies der DPCH. Dies hat den Vorteil, dass die bisherige Signalisierung für die Auswahl der Transmit Diversity Verfahren für den DPCH wiederverwendet werden kann. In einer vorteilhaften Ausgestaltung hängt auch die Leistungsermittlungsmethode von der verwendeten Transmit Methode auf dem bzw. den zugehörigen Datenübetragungskanälen ab.

2. Die Antennengewichte $w_i$ werden aus den aktuellen Kanaleigenschaften bestimmt.

3. Die Antennengewichte $w_i$ werden aus vergangenen Kanaleigenschaften bestimmt.

4. Die Antennengewichte $w_i$ werden aus in der Vergangenheit übertragenen Rückkopplungsinformationen bestimmt. Die Antennengewichte $w_i$ werden aus denjenigen in der Vergangenheit übertragenen Rückkopplungsinformationen bestimmt, die in der Basisstation für die Bestimmung der aktuell verwendeten Antennengewichte verwendet werden.

5. Bei der Bestimmung der Antennengewichte werden Übertragungsfehler der Rückkopplungsinformationen wahlweise berücksichtigt oder nicht berücksichtigt.

6. Bei der Bestimmung der Antennengewichte wird die Diskretisierung der Rückkopplungsinformationen berücksichtigt.

7. Bei der Bestimmung der Antennengewichte wird die Diskretisierung der Rückkopplungsinformationen nicht berücksichtigt.

8. Bei der Bestimmung der Antennengewichte wird die Verzögerung der Rückkopplungsinformationen berücksichtigt.

9. Bei der Bestimmung der Antennengewichte wird die Verzögerung der Rückkopplungsinformationen nicht berücksichtigt.

10. Bei der Berechnung der Kanalqualität wird die Verzögerung der Rückkopplungsinformationen nicht berücksichtigt, aber für die Übermittlung die Kanalqualität um einen pauschalen Wert reduziert. Dieser pauschalen Wertes lässt sich beispielsweise aus dem zeitlichen Verhalten des Kanals in der Vergangenheit bestimmen.

Ein entsprechendes Terminal in einem Kommunikationsnetz sollte sich zur Durchführung der aufgeführten Verfahren eignen, also beispielsweise entsprechende Speichermittel oder Rechenmittel aufweisen. In einer entsprechenden Basisstation werden die Informationen zur Kanalqualität verarbeitet, d.h. im Falle von UMTS der CQI Report analysiert und auf Basis dieser Analyse beispielsweise Antennengewichte eingestellt oder die Sendeleistung bzw. Modulation angepasst.

Literaturverzeichnis:

3GPP TS 25.214 V5.2.0 (2002-09)
(3rd Generation Partnership Project;
Technical Specification Group Radio Access Network;
Physical layer procedures (FDD)
(Release 5), 3GPP, 650 Route des Lucioles - Sophia Antipolis Valbonne - FRANCE)

3GPP TS 25.211 V4.3.0 (2001-12)
Technical Specification
3rd Generation Partnership Project;
Technical Specification Group Radio Access Network;
Physical channels and mapping of transport channels onto physical channels (FDD)
(Release 4)),
3GPP, 650 Route des Lucioles - Sophia Antipolis
Valbonne - FRANCE)

**Patentansprüche**

1. Verfahren zur Schätzung der Kanalqualität eines Kanals zur Datenübertragung von einer Basisstation an eine Mobilstation

- bei der die Datenübertragung über zumindest zwei Antennenelemente eines Antennensystems der Basisstation erfolgt und **dadurch** charakterisiert dass die Qualität des Kanals anhand einer Empfangsleistung eines Pilotkanals unter Berücksichtigung seitens der Mobilstation für die Datenübertragung vorgesehener Antennengewichte geschätzt wird, wobei Informationen zur Angabe dieser Antennengewichte zuvor von der Mobilstation an die Basisstation übertragen werden.

2. Verfahren nach Anspruch 1, bei dem die Schätzung der Kanalqualität über durch jeweils durch ein Antennenelement bestimmte Übertragungswege erfolgt, wobei jeder Übertragungsweg individuell anhand eines Pilotsignals geschätzt wird.

3. Verfahren nach Anspruch 1 oder 2, bei dem die Schätzung der Kanalqualität für den Datenübertragungskanal auf Basis der einzelnen Kanäle in folgenden Schritten durchgeführt wird:

   - Erfassen einer Einzelschätzung $h_i$ mittels eines dem einzelnen Datenübertragungskanal zugeordneten Pilotkanals, der i-ten Antenne, wobei i eine ganze Zahl zwischen 1 und n ist und n die Gesamtzahl der Antennen bezeichnet;
   - Multiplikation von $h_i$ mit $w_i$ wobei $w_i$ das der i-ten Antenne zugeordnete Antennengewicht ist;

   - Addition der einzelnen Produkte zu einer Summe $\sum_i h_i w_i$ ;

   - Quadratbildung des Betrages dieser Summe $P'_{pilot} = \left| \sum_i h_i w_i \right|^2$ .

4. Verfahren nach Anspruch 2, bei dem die Schätzung der Kanalqualität für den Datenübertragungskanal auf Basis der einzelnen Kanäle durchgeführt wird und eine Summe $P'_{pilot} = \left| \sum_i rp_i w_i \right|^2$ gebildet wird, wobei $w_i$ das der i-ten Antenne zugeordnete Antennengewicht und $rp_i$ das i-te empfangene Pilotsignal ist.

5. Verfahren nach Anspruch 3 oder 4, wobei die Größe $P'_{Pilot}$ die Empfangsleistung des auf dem Pilotkanal gesendeten Pilotsignals bezeichnet.

6. Verfahren nach einem der vorstehenden Ansprüche, wobei die Kanalqualität durch einen die Kanalqualität beschreibenden Parameter angegeben wird.

7. Mobilfunksystem, bei dem zur Schätzung der Kanalqualität das Verfahren nach einem der obigen Ansprüche 1 bis 6 verwendet wird.

8. Mobilfunksystem nach Anspruch 7, bei dem das Mobilfunksystem ein UMTS System ist und ein die Kanalqualität beschreibender Parameter der CQI Parameter ist.

9. Mobilstation mit Speichermitteln und Rechenmitteln zur Durchführung eines Verfahrens nach einem der Ansprüche 1 bis 6.

**Claims**

1. Method for estimating the quality of a channel for the transmission of data from a base station to a mobile station

   - in which the transmission of data is carried out via at least two antenna elements of an antenna system of the base station
   - and **characterized in that** the quality of the channel is estimated with the aid of the receive power of a pilot channel taking into consideration antenna weights for data transmission provided by the mobile station, with information for specifying these antenna weights being transmitted beforehand from the mobile station to the base station.

**2.** Method according to claim 1, in which the estimation of the channel quality is carried out via specific transmission paths defined by an antenna element in each case, with each transmission path being estimated individually with the aid of a pilot signal.

**3.** Method according to claim 1 or 2, in which the channel quality is estimated in the following steps for the data transmission channel on the basis of the individual channels:

- Detection of a single estimation $h_i$ by means of a pilot channel allocated to the individual data transmission channel, the $i^{th}$ antenna, with i being a whole number between 1 and n and n referring to the total number of said antennas;
- Multiplying $h_i$ by $w_i$, with $w_i$ being the antenna weight allocated to the $i^{th}$ antenna;

- Adding up the individual products to a $\sum_i h_i w_i$ sum ;

- Forming the square of the amount of this $P'_{Pilot} = \left| \sum_i h_i w_i \right|^2$ sum.

**4.** Method according to claim 2, in which the channel quality is estimated for the data transmission channel on the basis of the individual channels and a sum $P'_{Pilot} = \left| \sum_i rp_i w_i \right|^2$ is formed, with $w_i$ being the antenna weight allocated to the $i^{th}$ antenna and $rp_i$ the $i^{th}$ received pilot signal.

**5.** Method according to claim 3 or 4, with the variable $P'_{Pilot}$ referring to the receive power of the pilot signal sent in the pilot channel.

**6.** Method according to one of the previous claims, with the quality of a channel being specified by a parameter describing the quality of a channel.

**7.** Mobile radio system, in which the method in accordance with one of the above-mentioned claims 1 to 6 is used for estimating the quality of a channel.

**8.** Mobile radio system according to claim 7, in which the mobile radio system is a UMTS system and a parameter describing the quality of a channel is the CQI parameter.

**9.** Mobile station with storage means and calculation means for executing a method according to one of the claims 1 to 6.

**Revendications**

**1.** Procédé pour évaluer la qualité de canal d'un canal pour la transmission de données d'une station de base à une station mobile

- dans laquelle la transmission de données s'effectue au moins d'au moins deux éléments d'antenne d'un système d'antenne de la station de base
- et **caractérisé en ce que** la qualité du canal est évaluée à l'aide d'une puissance d'émission d'un canal pilote compte tenu de poids d'antenne prévus par la station mobile pour la transmission de données, des informations concernant l'indication de ces poids d'antenne étant transmises auparavant de la station mobile à la station de base.

**2.** Procédé selon la revendication 1, dans lequel l'évaluation de la qualité du canal s'effectue par des voies de transmission définies à chaque fois par un élément d'antenne, chaque voie de transmission étant évaluée individuellement à l'aide d'un signal pilote.

**3.** Procédé selon la revendication 1 ou 2, dans lequel l'évaluation de la qualité du canal pour le canal de transmission de données est effectuée sur la base des canaux individuels lors des étapes suivantes :

- détection d'une évaluation individuelle $h_i$ au moyen d'un canal pilote attribué au canal de transmission de données individuel, de la i-ème antenne, i étant un nombre entier compris entre 1 et n et n désignant le nombre total des antennes ;
- multiplication de $h_i$ par $w_i$, $w_i$ étant le poids d'antenne attribué à la i-ème antenne ;

- addition des produits individuels pour former une somme $\sum_i h_i w_i$ ;

- formation du carré de la valeur de cette somme $P'_{pilote} = \left| \sum_i h_i w_i \right|^2$.

4. Procédé selon la revendication 2, dans lequel l'évaluation de la qualité du canal pour le canal de transmission de données est effectuée sur la base des canaux individuels et une somme $P'_{pilote} = \left| \sum_i rp_i w_i \right|^2$ est formée, $w_i$ étant le poids d'antenne attribué à la i-ième antenne et $rp_i$ le i-ième signal pilote reçu.

5. Procédé selon la revendication 3 ou 4, la grandeur $P'_{pilote}$ désignant la puissance de réception du signal pilote émis sur le canal pilote.

6. Procédé selon l'une quelconque des revendications, la qualité du canal étant indiquée par un paramètre décrivant la qualité du canal.

7. Système de téléphonie mobile, dans lequel, pour l'évaluation de la qualité du canal, on utilise le procédé selon l'une quelconque des revendications 1 à 6.

8. Système de téléphonie mobile selon la revendication 7, dans lequel le système de téléphonie mobile est un système UMTS et un paramètre décrivant la qualité du canal est le paramètre CQI.

9. Station mobile avec des moyens de stockage et des moyens de calcul pour la mise en oeuvre d'un procédé selon l'une quelconque des revendications 1 à 6.

Figure 1